(19) Europäisches Patentamt
European Patent Office
Office européen des brevets

(11) **EP 3 400 261 B1**

(12) **EUROPEAN PATENT SPECIFICATION**

(45) Date of publication and mention of the grant of the patent:
**29.07.2020 Bulletin 2020/31**

(21) Application number: **16816462.2**

(22) Date of filing: **14.11.2016**

(51) Int Cl.:
*C08J 3/00* (2006.01)          *C08J 3/20* (2006.01)
*C08K 3/34* (2006.01)          *C08L 23/16* (2006.01)
*C08L 21/00* (2006.01)          *C08L 51/06* (2006.01)

(86) International application number:
**PCT/US2016/061746**

(87) International publication number:
**WO 2017/119949 (13.07.2017 Gazette 2017/28)**

(54) **THERMOPLASTIC VULCANIZATE COMPOSITIONS, ARTICLES MADE THEREFROM, AND METHODS FOR MAKING THEREOF**

THERMOPLASTISCHE VULKANISATZUSAMMENSETZUNGEN, DARAUS GEFORMTE ARTIKEL UND VERFAHREN ZUR HERSTELLUNG DAVON

COMPOSITIONS DE VULCANISAT THERMOPLASTIQUE, ARTICLES FABRIQUÉS À PARTIR DE CES DERNIÈRES, ET LEURS PROCÉDÉS DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.01.2016 US 201662276696 P**

(43) Date of publication of application:
**14.11.2018 Bulletin 2018/46**

(73) Proprietor: **ExxonMobil Chemical Patents Inc.**
**Baytown, TX 77520 (US)**

(72) Inventors:
• **JOURDAIN, Eric P.**
  **1640 Rhode Saint Genese (BE)**

• **KENENS, Leander, M.**
  **3010 Vlaams Brabant (BE)**
• **ZHANG, Weiqian**
  **Shanghai 201101 (CN)**

(74) Representative: **ExxonMobil Chemical Europe Inc.**
**IP Law Europe**
**Hermeslaan 2**
**1831 Machelen (BE)**

(56) References cited:
**WO-A1-03/020514**          **US-A- 5 609 962**
**US-A1- 2005 131 154**          **US-A1- 2008 021 159**
**US-A1- 2008 194 734**          **US-A1- 2009 163 665**
**US-B1- 6 326 084**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

## CROSS REFERENCE OF RELATED APPLICATIONS

This application claims the benefit of and priority to U.S. Provisional Application No. 62/276,696, filed January 8, 2016, the disclosure of which is hereby incorporated by reference in its entirety.

## FIELD OF THE INVENTION

This invention relates to thermoplastic vulcanizate compositions, articles made therefrom, and methods for making thereof. More particularly, the invention relates to a reaction product formed by a thermoplastic vulcanizate composition, which can be used in automotive extruded sealing profiles, such as glass run channel, glass encapsulation, and belt line seals.

## BACKGROUND OF THE INVENTION

Recent general trends in motor vehicles, particularly automobiles, translated into smaller size vehicles compared to the automobiles generally available during the first three quarters of the 20th century. Consumers usually perceive the quality of a car through its comfort and visual aspects. Additionally, vehicles are becoming more aerodynamically designed. These factors, among others, generally make today's motor vehicles more insulated from the outside noise, air and water ingression than earlier automobiles.

The combination of these factors leads to more sophisticated design for the elastomeric sealing systems in general around the doors and the windows, fixed or moveable. As an example, whether extreme low ambient temperatures or high temperature and humidity in warm climates, the sealing system has to operate nearly perfectly even after several years. Car makers suppliers have developed new methods to improve the sealing performance of the elastomeric sealing systems, like coating of silicone or polyurethane on rubber profiles, generally fabricated with compounds containing an ethylene, alpha-olefin, diene monomer elastomeric polymer such as, but not limited to, ethylene, propylene, diene methylene monomer rubber (EPDM).

Automotive sealing system around moveable windows includes an extruded glass run channel (GRC) with one or several injection molded corners. The bonding between the GRC and the corner is critical for the part performance over the life time of the car.

Currently in the manufacture of elastomeric sealing parts, the manufacturer uses mechanical or chemical surface modification to obtain the necessary adhesion on EPDM elastomeric profiles. For example, the adhesion of the flock is improved by mechanically abrading the surface of the profile before depositing the adhesive. An electrostatic treatment under high voltage discharge is used to create/increase surface polarity. The adhesion of rubber to metal is insured by an adhesive generally laid on the metal before co-extrusion with the elastomeric profile. All such techniques well known by those who are skilled in the art of producing elastomeric body seals are generally expensive and complex. They are generally source of surface defects and scrap since any defect in the adhesive deposit or electric discharge treatment results in poor adhesion of the coating and rejection of the finished part after quality control.

Thermoplastic vulcanizates (TPV) have been used in automotive, industrial, and consumer markets. TPV is vulcanized thermoplastic elastomers where cross-linked rubber forms a dispersed, particulate, elastomeric phase within a continuous phase of a stiff thermoplastic such that thermoplastic properties are achieved. TPVs are conventionally produced by dynamic vulcanization. Dynamic vulcanization is a process whereby a rubber component is crosslinked, or vulcanized, under intensive shear and mixing conditions within a blend of at least one non-vulcanizing thermoplastic polymer component at or above the melting point of that thermoplastic. Typically, the rubber component forms cross-linked, elastomeric particles dispersed uniformly in the thermoplastic. See, for example, U.S. Patent Nos. 4,130,535; 4,311,268; 4,594,390; and 6,147,160.

However, it is reported, even with sufficient initial bonding force, the seal made from polymer compositions may still crack (or even break) at the corner interface during climatic cyclic testing. One of the reasons is believed to be the high coefficient of linear thermal expansion (CLTE) of the product, which generates stresses at the interface with changing temperature, which induces splitting, and therefore reduces the insulation performance of the composition. This type of elastomer is not suitable for zero-gap applications, where the polymer composition should have a CLTE as close as possible to that of adjacent parts.

Therefore, a product which displays a reduced coefficient of linear thermal expansion and can be incorporated continuously and easily in production processes of door seals, inner and outer belt seals, and metal carriers, while minimizing changes to the elastic characteristic and sealing performance of the part, would be highly desirable, but has been heretofore unattainable.

## SUMMARY OF THE INVENTION

The present invention provides a composition, preferably a reaction product formed from a composition, comprising a thermoplastic vulcanizate, a functionalized polymer, and an inorganic filler.

The reaction product is formed from a composition that may comprise a thermoplastic vulcanizate, a functionalized polymer, and an inorganic filler, wherein:

the thermoplastic vulcanizate comprises: (i) about 5 wt.% to about 85 wt.% of a thermoplastic resin component, and (ii) about 15 wt.% to about 95 wt.% of a dispersed and at least partially vulcanized rubber component, based on the total weight of the thermoplastic resin component and the rubber component;
the inorganic filler has a median particle diameter of 0.1-100 microns; and
the coefficient of linear thermal expansion measured either with injection mold flow or across injection mold flow of the reaction product is at least about 10% less than the coefficient of linear thermal expansion of a product free of the functionalized polymer and the inorganic filler but otherwise identical in terms of its constituents.

Also provided is a method comprising:

(a) combining a composition comprising a thermoplastic vulcanizate, a functionalized polymer and an inorganic filler, wherein:
the thermoplastic vulcanizate comprises: (i) about 5 wt.% to about 85 wt.% of a thermoplastic resin component, and (ii) about 15 wt.% to about 95 wt.% of a dispersed and at least partially vulcanized rubber component, based on the total weight of the thermoplastic resin component and the rubber component; and
(b) compounding the composition;
wherein the coefficient of linear thermal expansion measured either with injection mold flow or across injection mold flow of the compounded composition is at least about 10% less than the coefficient of linear thermal expansion of a product free of the functionalized polymer and the inorganic filler, but that is otherwise identical in terms of its constituents.

Also provided is a method for reducing the coefficient of linear thermal expansion of a composition, which comprises the steps of:

(a) combining a thermoplastic vulcanizate, a functionalized polymer and an inorganic filler to form a composition, wherein the thermoplastic vulcanizate comprises: (i) about 5 wt.% to about 85 wt.% of a thermoplastic resin component, and (ii) about 15 wt.% to about 95 wt.% of a dispersed and at least partially vulcanized rubber component, based on the total weight of the thermoplastic resin component and the rubber component; and
(b) compounding the composition.

Also provided is an article comprising the reaction product as described herein or made according to any method disclosed herein.

## DETAILED DESCRIPTION OF THE PRESENT INVENTION

Various specific embodiments and versions of the present invention will now be described, including preferred embodiments and definitions that are adopted herein. While the following detailed description gives specific preferred embodiments, those skilled in the art will appreciate that these embodiments are exemplary only, and that the present invention can be practiced in other ways. Any reference to the "invention" may refer to one or more, but not necessarily all, of the embodiments defined by the claims. The use of headings is for purposes of convenience only and does not limit the scope of the present invention.

As used herein, a "polymer" may be used to refer to homopolymers or copolymers (including terpolymers and polymers formed from more than 3 comonomers). Copolymers may also be referred to synonymously as interpolymers.

As used herein, when a polymer is referred to as comprising a monomer (e.g., "comprising ethylene" or, equivalently, "comprising ethylene-derived units"), the monomer is present in the polymer in the polymerized form of the monomer (otherwise referred to as the "derivative form" of the monomer).

As used herein, unless specified otherwise, "molecular weight" means weight average molecular weight ("Mw"). Mw is determined using Gel Permeation Chromatography. Molecular Weight Distribution ("MWD") means Mw divided by number average molecular weight ("Mn"). (For more information, see U.S. Patent Nos. 4,540,753 to Cozewith et al. and references cited therein, and in Ver Strate et al., 21 MACROMOLECULES, pp. 3360-3371 (1998)). The "Mz" value is the high average molecular weight value, calculated as discussed by A.R. Cooper in Concise Encyclopedia of Polymer Science and Engineering, pp. 638-639 (J.I. Kroschwitz, ed. John Wiley & Sons 1990).

As used herein, when a polymer composition or blend is said to comprise a certain percentage, wt.%, of a monomer, that percentage of monomer is based on the total amount of monomer units in weight present in all the polymer components of the composition or blend (unless otherwise specified).

As used herein, the term "vulcanizate" means a composition that includes some component (e.g., rubber) that has been vulcanized. The term "vulcanized" is defined herein in its broadest sense, as reflected in any issued patent, printed publication, or dictionary, and refers in general to the state of a composition after all or a portion of the composition (e.g., crosslinkable rubber) has been subjected to some degree or amount of vulcanization. Accordingly, the term encompasses both partial and total vulcanization. A preferred type of vulcanization is "dynamic vulcanization," discussed below, which also produces a "vulcanizate." Also, in at least one specific embodiment, the term "vulcanized" refers to more than insubstantial vulcanization, e.g., curing (crosslinking) that results in a measurable change in pertinent properties, e.g., a change in the melt flow index (MFI) of the composition by 10% or more (according to any ASTM-1238 procedure). In at least that context, the term vulcanization encompasses any form of curing (crosslinking), both thermal and chemical, which can be utilized in dynamic vulcanization.

As used herein, the term "dynamic vulcanization" means vulcanization or curing of a curable rubber component blended with a thermoplastic resin component under conditions of shear at temperatures sufficient to plasticize the mixture. In at least one embodiment, the rubber component is simultaneously crosslinked and dispersed as micro-sized particles within the thermoplastic resin component. Depending on the degree of cure, the rubber component to thermoplastic resin component ratio, compatibility of the rubber component and thermoplastic resin component, the kneader type and the intensity of mixing (shear rate), other morphologies, such as co-continuous rubber phases in the plastic matrix, are possible.

As used herein, an "at least partially vulcanized" rubber component is one wherein more than 5 wt.% of the crosslinkable rubber component is extractable in boiling xylene, subsequent to vulcanization (preferably dynamic vulcanization), e.g., crosslinking of the rubber phase of the thermoplastic vulcanizate. For example, at least 5 wt.% and less than 20 wt.%, or 30 wt.%, or 50 wt.%, of the crosslinkable rubber component can be extractable from the specimen of the thermoplastic vulcanizate in boiling xylene. The percentage of extractable rubber component can be determined by the technique set forth in U.S. Patent No. 4,311,628, and the portions of that patent referring to that technique are hereby incorporated by reference.

As used herein, "phr" is a measurement of the number of parts by weight of a non-rubber component of a thermoplastic elastomer or thermoplastic vulcanizate per 100 parts by weight of the rubber component of the thermoplastic elastomer or thermoplastic vulcanizate. For example, if a thermoplastic vulcanizate contains 15 parts by weight thermoplastic, 2.5 parts by weight carbon black and 250 parts by weight rubber, then it can be said to contain 6 phr thermoplastic and 1 phr carbon black. The term "phr" is commonly used by those of skill in the art of thermoplastic elastomers and vulcanizate formulations and is readily understood by them to be as defined herein.

As used herein, Melt Flow Rates ("MFR") are determined in accordance with ASTM D1238 at 230°C and 2.16 kg weight.

As used herein, Melt Indices ("MI") are determined in accordance with ASTM D1238 at 190°C and 2.16 kg weight.

The present invention provides a reaction product formed from a composition comprising a thermoplastic vulcanizate, a functionalized polymer, and an inorganic filler.

Thermoplastic Vulcanizate

As used herein, a "thermoplastic vulcanizate" is broadly defined as any composition that includes a dispersed, at least partially vulcanized, rubber component within a thermoplastic resin component. A thermoplastic vulcanizate is sometimes referred to herein by the abbreviation "TPV."

RUBBER COMPONENT

The rubber component of the thermoplastic vulcanizates can be any composition that is considered by persons skilled in the art to be a "rubber," preferably a crosslinkable rubber component (e.g., prior to vulcanization) or crosslinked rubber component (e.g., after vulcanization). For example, the rubber component can be any olefin-containing rubber such as ethylene-propylene copolymers (EPM), including particularly saturated compounds that can be vulcanized using free radical generators such as organic peroxides, as described in U.S. Patent No. 5,177,147. Other rubber components can include ethylene-propylene-diene (EPDM) rubber, or EPDM-type rubber, for example, an EPDM-type rubber can be a terpolymer derived from the polymerization of at least two different mono olefin monomers having from 2 to 10 carbon atoms, preferably 2 to 4 carbon atoms, and at least one polyunsaturated olefin (a "polyolefin") having from 5 to 20 carbon atoms. In particular embodiments, the polyolefin of rubber terpolymers is a non-conjugated polyolefin (e.g., a non-conjugated diene).

The rubber component can also be a butyl rubber. The term "butyl rubber" includes a polymer that predominantly includes repeat units from isobutylene but also includes a few repeat units of a monomer that provides a site for crosslinking. Monomers providing sites for crosslinking include a polyunsaturated monomer such as a conjugated diene or divinyl benzene. In one or more embodiments of the invention, the butyl rubber polymer can be halogenated to further enhance reactivity in crosslinking. Those polymers are referred to as "halobutyl rubbers".

Further, the rubber component can be homopolymers of conjugated dienes having from 4 to 8 carbon atoms and rubber copolymers having at least 50 wt.% repeat units from at least one conjugated diene having from 4 to 8 carbon atoms. The rubber component can also be synthetic rubber, which can be nonpolar or polar depending on the comonomers. Examples of synthetic rubbers include synthetic polyisoprene, polybutadiene rubber, styrenebutadiene rubber, butadiene-acrylonitrile rubber, etc. Amine-functionalized, carboxy-functionalized or epoxy-functionalized synthetic rubbers can also be used. Examples of those include maleated polyolefins, EPM, EPDM and epoxy-functionalized natural rubbers.

A list of preferred rubber component include, but are not limited to, ethylene-propylene rubber, ethylene-propylene-diene rubber, natural rubber, butyl rubber including halobutyl rubber, halogenated rubber copolymer of p-alkylstyrene and at least one isomonoolefin having 4 to 7 carbon atoms, a copolymer of isobutylene and divinyl-benzene, a rubber homopolymer of a conjugated diene having from 4 to 8 carbon atoms, a rubber copolymer having at least 50 wt.% repeat units from at least one conjugated diene having from 4 to 8 carbon atoms and a vinyl aromatic monomer having from 8 to 12 carbon atoms, or acrylonitrile monomer, or an alkyl substituted acrylonitrile monomer having from 3 to 8 carbon atoms, or an unsaturated carboxylic acid monomer, or an unsaturated anhydride of a dicarboxylic acid, or combinations thereon.

The rubber component may be present in the amount of from about 15 wt.% to about 95 wt.%, based upon the total weight of rubber component and thermoplastic resin component. In one or more embodiments, the rubber component is present in the amount of from about 45 wt.% to about 90 wt.%, or 60 wt.% to 88 wt.%, based upon the total weight of rubber component and thermoplastic resin component.

## THERMOPLASTIC RESIN COMPONENT

The thermoplastic resin component of the thermoplastic vulcanizates can be any composition that is not a "rubber" and that is a polymer or polymer blend considered by persons skilled in the art as being thermoplastic in nature, e.g., a polymer that softens when exposed to heat and returns to its original condition when cooled to room temperature. The thermoplastic resin component can contain one or more polyolefins, including polyolefin homopolymers and polyolefin copolymers. In one or more embodiments of the invention, the thermoplastic resin component comprises at least one of i) a polymer prepared from olefin monomers having 2 to 7 carbon atoms, and ii) a copolymer prepared from olefin monomers having 2 to 7 carbon atoms with a (meth)acrylate or a vinyl acetate. Illustrative polyolefins can be prepared from mono-olefin monomers including, but are not limited to, ethylene, propylene, 1-butene, isobutylene, 1-pentene, 1-hexene, 1-octene, 3-methyl-1-pentene, 4-methyl-1-pentene, 5-methyl-1-hexene, mixtures thereof and copolymers thereof with (meth)acrylates and/or vinyl acetates. In one or more preferred embodiments, the thermoplastic resin component comprises polyethylene, polypropylene, ethylene-propylene copolymer or combinations thereof. Preferably, the thermoplastic resin component is unvulcanized or non-crosslinked.

In one or more embodiments, the thermoplastic resin component includes at least one of polyethylene, polypropylene, and ethylene-propylene copolymer. The term "polypropylene" as used herein broadly means any polymer that is considered a "polypropylene" by persons skilled in the art (as reflected in at least one patent or publication), and includes homo, impact, and random polymers or copolymer of propylene. In one or more embodiments, the thermoplastic resin component is or includes isotactic polypropylene. In one or more embodiments, the thermoplastic resin component is or includes a polypropylene, which can be derived only from propylene monomers (i.e., having only propylene units) or be derived from mainly propylene (more than 75% propylene) and other comonomers. As noted herein, certain polypropylenes having a high MFR (e.g., from a low of 10, or 15, or 20 dg/min to a high of 25 or 30 dg/min) may be used. Preferably, the thermoplastic resin component contains one or more crystalline propylene homopolymers or copolymers of propylene having a melting temperature at least 105°C as measured by DSC as described in Col. 20, lines 35-53 of U.S. Patent No. 6,342,565, incorporated by reference herein. Preferred copolymers of polypropylene include, but are not limited to, terpolymers of propylene, impact copolymers of propylene, random polypropylene, random copolymer of propylene, and mixtures thereof. Preferred comonomers have 2 carbon atoms, or from 4 to 12 carbon atoms. Preferably, the comonomer is ethylene. Such thermoplastic resin components and methods for making the same are described in U.S. Patent No. 6,342,565.

In one or more embodiments, the thermoplastic resin component is present in the amount of from about 5 wt.% to about 85 wt.% based upon the total weight of rubber component and thermoplastic resin component. In one or more embodiments, the thermoplastic resin component is present in the amount of from about 10 wt.% to about 55 wt.%, or from 12 wt.% to 40 wt.%, based upon the total weight of rubber component and thermoplastic resin component.

In one or more embodiments, the thermoplastic resin component may contain less than 50 wt.%, or less than 30 wt.%, or less than 10 wt.%, or less than 1 wt.% of a styrenic block copolymer. The styrenic block copolymer may have a hydrogenated midblock of styrene-ethylene/butylene-styrene (SEBS) or styrene-ethylene/propylene-styrene (SEPS). In other embodiments, the thermoplastic vulcanizate does not contain any SEBS, or does not contain any SEPS.

In one or more embodiments, the thermoplastic resin component may contain a copolymer of propylene and ethylene and/or C4 to C10 alpha-olefins, such as those described in U.S. Patent Publication No. 2007/044123, or a random thermoplastic propylene copolymer, such as those described in U.S. Patent No. 6,288,171.

METHODS FOR MAKING THERMOPLASTIC VULCANIZATES

Any process for making TPVs may be employed. TPVs are prepared using conventional blending techniques known to those skilled in the art. In one or more embodiments, the individual compositions and components, such as the one or more rubber components, thermoplastic resin components, additive oils, curatives, other additives, etc., may be blended by melt-mixing in any order in a mixer heated to above the melting temperature of the thermoplastic resin component. Curatives may be added before, during, or after blending, i.e., in separate curing steps or as part of the initial blending of rubber and thermoplastic components.

The one or more components, thermoplastic resin components, and curing agents can be added to a heated mixer as individual feed streams, as a tumbled blend, and/or as a masterbatch. The one or more thermoplastic resin components can be added before cure or divided in any proportions between before-cure and after-cure. The additive oil, e.g., process oil, can be added during mastication before-cure, after-cure, or divided in any proportions between before-cure and after-cure.

Preferably, the one or more curing agents are incorporated into the melt within a target range of melt temperature over a specified period of time (<120 seconds). The one or more curing agents can be added using any suitable technique, such as by injection as a solution in a compatible process oil, as a neat solid, as a neat melt, or as a masterbatch, for example.

One or more fillers or other additives can be introduced to the melt either before, during or after the cure. The additives, fillers or other compounds, which may interfere with the curing agents, should be added after curing reaches the desired level. Preferably, those additives are added to the melt as a slurry or paste in a compatible rubber process oil. Powder blends or masterbatches of these components can be prepared in a wax or polymer carrier to facilitate metering and mixing. Following the cure and sufficient mixing of the melt, the melt blend can be processed to form an elastomeric structure using any one or more of the following techniques: milling, chopping, extrusion, pelletizing, injection molding, or any other desirable technique.

Additional details for making TPVs and conventional TPV compositions are described in U.S. Patent No. 4,594,390; 4,311,628; 5,672,660; 5,843,577; 6,300,418; Japanese Patent Application No. JP 2005 336359; and an ANTEC 2006 paper of May 8, 2006, which are each incorporated herein by reference.

THERMOPLASTIC VULCANIZATE PROPERTIES

Thermoplastic vulcanizate compositions can be processed and recycled like thermoplastic compositions (ASTM D1566). The term "dynamic vulcanization" is herein intended to include a vulcanization process in which a vulcanizable elastomer is vulcanized under conditions of high shear in the presence of a thermoplastic polyolefin resin. As a result, the vulcanizable elastomer is simultaneously crosslinked and dispersed as fine particles within the resin.

Thermoplastic elastomer ("TPE") and TPV compositions are elastic in that they are capable of recovering from deformations. One measure of elastic behavior is that a composition will retract to less than 1.5 times its original length within one minute, after being stretched at room temperature to twice its original length and held for one minute before release (ASTM D1566). Another measure is found in ASTM D412, for the determination of tensile set. The compositions are also characterized by high elastic recovery, which refers to the proportion of recovery after deformation and may be quantified as percent recovery after compression. A perfectly elastic composition has a recovery of 100% while a perfectly plastic composition has no elastic recovery. Yet another measure is found in ASTM D395, for the determination of compression set.

Examples of useful thermoplastic vulcanizates may include those commercially available under the trade name Santoprene™ (ExxonMobil Chemical Company, Houston, TX, USA).

Functionalized Polymer

Typically, the polymer to be functionalized is combined with a free radical initiator and a grafting monomer or other functional group (such as maleic acid or maleic anhydride) and is heated to react the monomer with the polymer, copolymer, oligomer, etc. to form the functionalized polymer. Multiple methods exist in the art for functionalizing polymers that may be used with the polymers described here. These include, but are not limited to, selective oxidation, free radical grafting, ozonolysis, epoxidation, and the like.

Preferred functionalized polymers that may be used herein include those described in WO 03/025084, WO 03/025037, WO 03/025036, and EP Patent No. 1 295 926 A1 which are incorporated by reference herein.

Preferred functionalized polymers have an Mw of 1000 to 20,000, preferably 2000 to 15,000, more preferably 3000 to 10,000.

In preferred embodiments, a polymer is functionalized with one or more unsaturated acids or anhydrides containing at least one double bond and at least one carbonyl group and used as the functionalized component of such embodiments. Representative acids include carboxylic acids, anhydrides, esters and their salts, both metallic and nonmetallic. Preferably the organic compound contains an ethylenic unsaturation conjugated with a carbonyl group (-C=O). Examples include maleic, fumaric, acrylic, methacrylic, itaconic, crotonic, alpha methyl crotonic, and cinnamic acids as well as their anhydrides, esters and salt derivatives. Particularly preferred functional groups include maleic acid and maleic anhydride. Maleic anhydride is particularly preferred. The unsaturated acid or anhydride is preferably present at about 0.1 wt. % to about 10 wt.%, preferably at about 0.5 wt.% to about 7 wt.%, even more preferably at about 1 to about 4 wt.%, based upon the weight of the polymer and the unsaturated acid or anhydride. In a preferred embodiment, the unsaturated acid or anhydride comprises a carboxylic acid or a derivative thereof selected from the group consisting of unsaturated carboxylic acids, unsaturated carboxylic acid derivatives selected from esters, imides, amides, anhydrides and cyclic acid anhydrides or mixtures thereof.

The polymers and blends thereof may be functionalized for use in the present invention such that functional groups may be grafted onto the polymers, preferably utilizing radical copolymerization of an functional group, also referred to herein as graft copolymerization. The end result being a functionalized polymer, abbreviated herein as AA-g-XX, wherein AA represents the specific type of polymer being functionalized, XX refers to the functional group or compounds with which the polymer was functionalized with, and -g-represents grafting between the two moieties. Preferred functional groups include any compound containing one or more heteroatoms and/or one or more unsaturations. Preferably the functional group is a compound containing a heteroatom, such as maleic anhydride. Preferred functional groups include organic acids, organic amides, organic amines, organic esters, organic anhydrides, organic alcohols, organic acid halides (such as acid chlorides, acid bromides, etc.) organic peroxides, and salts thereof.

Examples of preferred functional groups useful in this invention include compounds comprising a carbonyl bond such as carboxylic acids, esters of the unsaturated carboxylic acids, acid anhydrides, di-esters, salts, amides, imides, aromatic vinyl compounds hydrolyzable unsaturated silane compounds and unsaturated halogenated hydrocarbons.

Examples of particularly preferred functional groups useful in this invention include, but are not limited to, maleic anhydride, citraconic anhydride, 2-methyl maleic anhydride, 2-chloromaleic anhydride, 2,3-dimethylmaleic anhydride, bicyclo[2,2,1]-5-heptene-2,3-dicarboxylic anhydride and 4-methyl-4-cyclohexene- 1,2-dicarboxylic anhydride, acrylic acid, methacrylic acid, maleic acid, fumaric acid, itaconic acid, citraconic acid, mesaconic acid, crotonic acid, bicyclo(2.2.2)oct-5-ene-2,3-dicarboxylic acid anhydride, 2-oxa-1,3-diketospiro(4.4)non-7-ene, bicyclo(2.2.1)hept-5-ene-2,3-dicarboxylic acid anhydride, maleopimaric acid, tetrahydrophtalic anhydride, norborn-5-ene-2,3-dicarboxylic acid anhydride, nadic anhydride, methyl nadic anhydride, himic anhydride, methyl himic anhydride, and x-methyl-bicyclo(2.2.1)hept-5-ene-2,3- dicarboxylic acid anhydride (XMNA).

Examples of esters of unsaturated carboxylic acids useful in this invention as functional groups include methyl acrylate, ethyl acrylate, butyl acrylate, methyl methacrylate, ethyl methacrylate and butyl methacrylate. Examples of hydrolyzable unsaturated silane compounds useful as functional groups in this invention include radical polymerizable unsaturated group and an alkoxysilyl group or a silyl group in its molecule, such that the compound has a hydrolyzable silyl group bonded to a vinyl group and/or a hydrolyzable silyl group bonded to the vinyl group via an alkylene group, and/or a compound having a hydrolyzable silyl group bonded to an ester or an amide of acrylic acid, methacrylic acid or the like. Examples thereof include vinyltrichlorosilane, vinyltris(beta-methoxyethoxy)silane, vinyltriethoxysilane, vinyltrimethoxysilane, gamma-methacryloxypropyltrimethoxysilane monovinylsilane and monoallylsilane.

Examples of unsaturated halogenated hydrocarbons useful as functional groups in this invention include vinyl chloride and vinylidene chloride.

Preferable examples of the radical initiator used in the graft copolymerization include organic peroxides such as benzoyl peroxide, methyl ethyl ketone peroxide, cyclohexanone peroxide, t-butylperoxyisopropyl carbonate, di-t-butyl perphthalate, 2,5-dimethyl-2,5-di(t-butylperoxy)hexene, 2,5-dimethyl-2,5-di(t-butylperoxy)hexene-3, di-t-butyl peroxide, cumene hydroperoxide, t-butyl hydroperoxide, dilauryl peroxide and dicumyl peroxide. The functionalized polymer of the present invention may thus be obtained by heating the polymer and the radical polymerizable functional group in the presence of the radical initiator at, near, or above a decomposition temperature of the radical initiator.

In some embodiments, no particular restriction need be put on the amount of the functional group to be used. Accordingly, conventional conditions for functionalizing, for example, an isotactic polypropylene, can be utilized. Since in some cases the efficiency of the copolymerization is relatively high, the amount of the functional group may be small. In an embodiment, the amount of the functional group to be incorporated into the polymer is preferably from about 0.001 to 50 wt.% functional group with respect to the total weight of the polymer. In a preferred embodiment, the amount of the maleic anhydride to be incorporated into the polymer is preferably from about 0.001 to 50 wt.% MA with respect to the total weight of the polymer.

The radical initiator is preferably used in a ratio of from 0.00001 to 10 wt.%, based on the weight of the functional group. The heating temperature depends upon whether or not the reaction is carried out in the presence of a solvent, but it is usually from about 50°C to 350°C. When the heating temperature is less than 50°C, the reaction may be slow and thus efficiency may be low. When it is more than 350°C, decomposition of the polypropylene copolymer may occur. The functionalized polymer may be functionalized with a functional group utilizing a solvent based functionalization process and/or utilizing a melt based functionalization process without a solvent.

In the solvent-based process, the reaction may be carried out using the polymer in the form of a solution or a slurry having a concentration of from 0.1 to 50 wt.% in the presence of a halogenated hydrocarbon compound having 2 to 20 carbon atoms, an aromatic compound, a halogenated aromatic compound, an alkyl-substituted aromatic hydrocarbon, a cyclic hydrocarbon, and/or a hydrocarbon compound having 6 to 20 carbon atoms, which is stable to the radicals.

In the functionalization process utilizing a melt-based functionalization process without a solvent, the reaction may be carried out in the absence of the solvent in a device such as an extruder which can sufficiently produce physical contact between what may be a highly viscous polymer. In the latter case, the reaction is usually effected at a relatively high temperature, as compared with the reaction in the state of the solution.

Other methods for functionalizing polymers that may be used with the polymers described herein include, but are not limited to, selective oxidation, ozonolysis, epoxidation, and the like, both in solution or slurry (i.e., with a solvent), or in a melt (i.e., without a solvent).

The functionalized polymer may be a single polymer which has been functionalized as described herein. In another embodiment, the functionalized polymer of the present invention may be a blend of polymers which are functionalized together during a single process. The functionalized polymer of the present invention may also include a plurality of functionalized polymers which are combined after being individually functionalized, or any combination thereof.

The graft polymerization (grafting of the polymer) according to various embodiments can be carried out in an aqueous medium. In this case a dispersant can be used, and examples of the dispersant include a saponified polyvinyl acetate, modified celluloses such as hydroxyethyl cellulose and hydroxypropyl cellulose, and compounds containing an OH group such as polyacrylic acid and polymethacrylic acid. In addition, compounds which are used in a usual aqueous suspension polymerization can also be widely employed. The reaction may be carried out by suspending the polymer, the water-insoluble radical polymerizable monomer, the water-insoluble radical initiator and/or the dispersant in water, and then heating the mixture. Here, a ratio of water to the sum of the radical polymerizable monomer (i.e., the functional group) and the PP copolymer is preferably 1:0.1 to 1:200, more preferably 1:1 to 1:100. The heating temperature is such that the half-life of the radical initiator is preferably from 0.1 to 100 hours, more preferably from 0.2 to 10 hours, and it is preferably from 30 to 200°C, more preferably from 40 to 150°C. In the heating step, it is preferred that the mixture is stirred sufficiently so as to become in a suspension state. In this way, the graft polymer (i.e., the functionalized component) may be obtained in granular form.

A weight ratio of the water-insoluble monomer to the polymer may preferably be from 1: 0.1 to 1:10000, and a weight ratio of the radical initiator to the water-insoluble monomer may be from 0.00001 to 0.1. The ratio of the water-insoluble monomer in the functionalized component depends upon its use, but the amount of the monomer may be from 0.1 to 200% by weight based on the weight of the graft copolymer.

The obtained functionalized polymer preferably contains a desired amount of radical polymerizable functional group units in the range of from 0.1 to 50 wt.% based on the weight of the polymer in compliance with its use or application. When the content of the radical polymerizable functional group units is in excess of 50 wt.%, the particular polymer may not exert intrinsic physical properties, and when it is less than the above-mentioned lower limit, the physical properties as the graft copolymer may not be obtained.

Furthermore, a compatibilizing effect within compositions obtained by inclusion of the functionalized polymer may be influenced by the level of grafting. In an embodiment, the polymer may be functionalized (e.g., grafted) to include about 0.001 wt% or greater of the functional group attached and/or incorporated into the polymer backbone. The polymer may also be functionalized (grafted) to a higher degree. The level of functionalization (e.g., the grafting level) may be less than about 50 wt.%, preferably less than any one of about 45, 40, 35, 30, 25, 20, 15, or 10 wt.%. Even more preferably, the level of functionalization is less than about 9 wt.%, such as less than about 5 wt.%. Most preferably, the level of functionalization is less than about 2 wt.%, such as less than about 1 wt.%, or less than about 0.5 wt.%. Thus, the level of functionalization of certain embodiments may be from about 0.001 wt% to about 10 wt.%, such as 0.001 wt% to about 5 wt.%, preferably 0.001 wt.% to about 1 wt.%, or 0.001 wt.% to about 0.5 wt.%.

In particular embodiments of the invention, the functionalized polymer is added in an amount of from about 0.1 wt.% to about 10 wt.%, based on the total weight of the composition. In preferred embodiments, the functionalized polymer is added in an amount of from about 0.1 wt.% to about 1 wt.% based on the total weight of the composition.

In preferred embodiments, functionalized polymer for use in this invention comprises functionalized polyolefin as described herein. The term "functionalized polyolefin" herein refers to a polyolefin that contains reactive functional groups, e.g., by way of the previously described grafting. Suitable polyolefins include isotactic polypropylene ("iPP"), homopolymers of ethylene, including high density polyethylene, low density polyethylene, very low density polyethylene, ethylene/propylene copolymer, ethylene/1-butene copolymer, ethylene/1-hexene copolymer, ethylene/1-octene copolymer (collectively, the polyethylene homopolymers and copolymers are referred to as "polyethylene" unless otherwise stated); isotactic poly(1-butene) and copolymers of 1-butene with ethylene, propylene, 1-hexene, or 1-octene (collectively, the isotactic poly(1-butene) homopolymers and copolymers are referred to as "isotactic poly(1-butene" unless otherwise stated); and syndiotactic polypropylene and copolymers of syndiotactic propylene with ethylene, 1-butene, 1-hexene, or 1-octene (collectively, the syndiotactic propylene homopolymers and copolymers are referred to as "syndiotactic propylene" unless otherwise stated), ands blends of the aforementioned. Functionalized poly(4-methyl-1-pentene) and copolymers thereof are also useful in the present invention.

Functional groups (also referred to as reactive groups) may include carboxylic acids and their derivatives, including acid anhydrides, acid chlorides, isocyanates, oxazolines, amines, hydroxides, and epoxides. A preferred functional group is an anhydride, most preferably maleic anhydride.

These reactive groups can be on the polyolefin polymer backbone, such as in copolymers of styrene and maleic anhydride available from NOVA Chemicals, under the trademark Dylark™ or the reactive groups may be grafted onto the main polyolefin backbone. Examples include polypropylene grafted with maleic anhydride available from Eastman Chemicals as Epolene E-43™, or polypropylene or polyethylene grafted with acrylic acid or maleic anhydride available from Chemtura Corp under the trademark POLYBOND, or Exxelor™ from ExxonMobil, or Fusabond™ which includes maleated isotactic polypropylene and maleated propylene/ethylene random copolymers from E. I. du Pont de Nemours and Company.

Many of these functionalized polyolefins are marketed directly as grafted copolymers or as blends. Examples of blends include Plexar™ grades from Equistar Chemical Co., Bynel™ grades from DuPont, Modic™ and Novatec™ from Mitsubishi, Admer™ from Mitsui, and Lupolen™ from Basell B.V.

Isotactic polypropylene modified with an anhydride, preferably maleic anhydride, is an exemplary functionalized polyolefin. This product may be referred to as maleated isotactic polypropylene, maleic anhydride grafted polypropylene, or iPP-g-MAH. The modified isotactic polypropylene may be grafted with between 0.5 to 2.0 wt.% of maleic anhydride. The weight percent of maleic anhydride may exceed 2.0 wt.%. In another embodiment, the weight percent of maleic anhydride may be from 0.75 wt.% to 2.0 wt.% and in another embodiment, from 1.0 wt.% to 2.0 wt.% and in still another embodiment, from 1.0 wt.% to 1.5 wt.% and in still another embodiment, from 0.5 wt.% to 1.0 wt.%.

Inorganic Filler

In addition to the TPV and functionalized polymer, compositions herein according to various embodiments comprise one or more inorganic fillers. Inorganic fillers that have good interfacial adhesion to the TPVs are more effective than those where no adhesion is present, because loads are more efficiently transferred from the TPVs to the filler. Very small inorganic fillers with high aspect ratios have high surface areas. They are highly efficient at sharing loads with the surrounding polymers. In particular, submicron inorganic fillers (< 1.0 $\mu$m particles) are highly efficient at increasing the moduli of the composition. Inorganic fillers should have adequate thermal stability to survive the high temperatures (250 to 3000°C) used to mold the compositions of this invention. In any of the above embodiments, preferably selects inorganic filler with a median particle diameter of less than 50 microns.

The classes of compositions described herein that are useful as inorganic fillers can be utilized alone or admixed to obtain desired properties. In any of the embodiments, the inorganic filler may be present at 0.1 to 50 wt.% (preferably 1 to 40 wt.%, preferably 2 to 30 wt.%, preferably 5 to 20 wt.%), based on the weight of the total composition. Inorganic filler content is equated with the wt.% as determined by the ISO 3451-I(A) test method. Desirable filler includes but not limited to: mineral aggregates (natural or synthetic), fibers, carbon black, graphite, wollastonite, natural and synthetic clays including nanoclays and organoclays, sand, glass beads, and the like, and any other porous or nonporous fillers and supports known in the art.

Preferred natural or synthetic mineral fillers include talc, mica, wollastonite, titanium dioxide, silicon carbide, silica, silicon dioxide and other oxides of silica (precipitated or not), calcium silicate, calcium and barium sulfates, calcium carbonate (calcite), lead carbonate, magnesium silicate, magnesium oxysulfates, antimony oxide, zinc white, lithopone, zircon, corundum, spinel, apatite, Barytes powder, magnesite, dolomite, zinc borate, hydrotalcite compounds of the ions Mg, Ca, or Zn with Al, Cr or Fe and $CO_3$ and/or $HPO_4$ (hydrated or not), quartz powder, hydrochloric magnesium carbonate, alumina, chrome, phosphorous and brominated flame retardants, antimony trioxide, silicone, other metal oxides, other metal carbonates, other metal hydroxides, and blends thereof.

Preferred clays include nanoclays or organoclays to produce a nanocomposite. These clays may comprise one or more of ammonium, primary alkylammonium, secondary alkylammonium, tertiary alkylammonium, quaternary alkylammonium, phosphonium derivatives of aliphatic, aromatic or arylaliphatic amines, phosphines or sulfides or sulfonium derivatives of aliphatic, aromatic or arylaliphatic amines, phosphines or sulfides. The organoclay may be selected from one or more of montmorillonite, sodium montmorillonite, calcium montmorillonite, magnesium montmorillonite, nontronite, beidellite, volkonskoite, laponite, hectorite, saponite, sauconite, magadite, kenyaite, sobockite, svindordite, stevensite, vermiculite, halloysite, aluminate oxides, hydrotalcite, illite, rectorite, tarosovite, ledikite, and/or florine mica. In another embodiment, the filler is a nano-clay with mean particle diameter of less than 1 micron.

In a preferred embodiment, the inorganic filler is selected from talc, calcium carbonate, calcium hydroxide, barium sulfate, mica, calcium silicate, clay, kaolin, silica, alumina, wollastonite, magnesium carbonate, magnesium hydroxide, titanium oxide, zinc oxide, zinc sulfate, and combinations thereof. In a more preferred embodiment, the inorganic filler is talc or wollastonite.

In preferred embodiments, the inorganic filler has a median particle diameter of 0.1-100 microns (preferably 0.5-50 microns, preferably 1 to 20 microns). In other preferred embodiments, the inorganic filler has a filler shape that is needle-like or plate-like, with an aspect ratio greater than 1.2 (preferably greater than 2, preferably greater than 3, preferably greater than 5, preferably greater than 10, preferably from 2 to 20, preferably from 3-10), where the aspect ratio is the ratio of the longest dimension to the shortest dimension of the particles, on average, and is typically reported by filler manufacturers. In other embodiments, the filler has an aspect ratio of essentially 1 (0.9 to 1.1); i.e., it is not needle-like or plate-like but is essentially spherical. In another embodiment, the filler is pulverized. Useful fillers have a specific surface area of 10 to 300 $m^2/cm^3$.

More preferred are talc fillers, because molded parts containing talc fillers typically have better surface appearance than molded parts containing fiber filled blends. Most preferred is the Imi Fabi Ultra 5C talc, because it is milled down to an average size of 0.5 $\mu$m. Talcs may be obtained from Luzenac, which is part of Rio Tinto, or from Imi Fabi. Mica or calcium metasilicate is available from Nyco Minerals, and short glass fibers are available from Owens-Coming Fiberglass.

In an embodiment, the inorganic filler is included in the composition (i.e., the compounded composition including TPV, inorganic filler, and functionalized polymer) in an amount within the range having a lower limit of 0 wt.%, or 1 wt.%, or 5 wt.%, or 10 wt.%, or 15 wt.%, and an upper limit of 25 wt.%, or 30 wt.%, or 35 wt.%, or 40 wt.%, based on the total weight of the composition. In a preferred embodiment, the inorganic filler is added in an amount of from about 4 wt.% to about 10 wt.%, based on the total weight of the composition.

Curatives

Curatives vulcanize, i.e., crosslink, the rubber component. The curative used depends on the rubber component. Conventional curatives and curative systems include those known to those skilled in the art of TPVs. Curatives include, but are not limited to, phenolic resin curatives and sulfur curatives, with or without accelerators, accelerators alone, peroxide curatives, hydrosilation curatives using silicon hydride and platinum or peroxide catalyst, etc. Preferably, when the rubber component is an EPM, a peroxide curative is used.

Hydrosilylation has also been disclosed as a crosslinking method for thermoplastic vulcanizates and is suitable in the process of the invention. In this method a silicon hydride having at least two SiH groups in the molecule is reacted with the carbon-carbon multiple bonds of the unsaturated (i.e., containing at least one carbon-carbon double bond) rubber component of the thermoplastic elastomer, in the presence of the thermoplastic resin and a hydrosilylation catalyst. Silicon hydride compounds useful in the process of the invention include methylhydrogen polysiloxanes, methylhydrogen dimethyl-siloxane copolymers, alkyl methyl polysiloxanes, bis(dimethylsilyl)alkanes and bis(dimethylsilyl)benzene. See, U.S. Patent Nos. 5,672,660, and 6,150,464, for further description, both are incorporated by reference.

The amount of curative used to prepare a first component TPV in the present invention may be readily determined by those of skill in the art based on (1) the type of curative, (2) the desired cure state of the rubber and (3) the amount and type of rubber present.

Accelerators that may be used include amines, guanidines, thioureas, thiazoles, thiurams, sulfenamides, sulfenimides, thiocarbamates, xanthates, and the like. Acceleration of the cure process can be accomplished by adding to the composition an amount of the accelerator. The mechanism for accelerated vulcanization of the compositions comprising EPDM involves complex interactions between the curative, accelerator, activators and polymers. Ideally, the entire available curative is consumed in the formation of effective crosslinks which join together two polymer chains and enhance the overall strength of the polymer matrix. Numerous accelerators are known in the art and include, but are not limited to, the following: stearic acid, diphenyl guanidine (DPG), tetramethylthiuram disulfide (TMTD), N'N-di-ortho-tolyl guanidine (DOTG), dipentamethylenethiuram tetrasulfide (DPTT), 4,4'-dithiodimorpholine (DTDM), tetrabutylthiuram disulfide (TBTD), 2-mercaptobenzthiazole (MBT), 2,2'-benzothiazyl disulfide (MBTS), hexamethylene-1,6-bisthiosulfate disodium salt dihydrate, 2-(morpholinothio) benzothiazole (MBS or MOR), compositions of 90% MOR and 10% MBTS (MOR 90), N-tertiarybutyl-2-benzothiazole sulfenamide (TBBS), N-oxydiethylene thiocarbamyl-N-oxydiethylene sulfonamide (OTOS), zinc diethyldithiocarbamate (ZDEC), zinc 2-ethyl hexanoate (ZEH), and N, N'-diethyl thiourea.

Additive Oil

"Additive oil" means both "process oils" and "extender oils," and each of those terms is defined herein in accordance with their standard meaning to those of ordinary skill in the art. For example, extender oils are generally incorporated into a rubber component (e.g., an EPDM terpolymers) at the point of manufacture of that rubber component, such that pellets, bales, or the like of the rubber component already include the extender oil, prior to that rubber component being incorporated into the TPV. "Process oil" typically refers to oils introduced during formation of the TPV. "Extender oil" and "process oil" may in some instances have similar or the same compositions; however, the nomenclature is intended to distinguish between the point of time in the process in which the oil is included into the rubber component or TPV, as applicable. Additive oils include a variety of hydrocarbon oils and also include certain plasticizers, e.g., ester plasticizers. In an illustrative TPV, an additive oil can be present in amounts from about 5 to about 300 parts by weight per 100 parts by weight of the blend of rubber and thermoplastic components. The amount of additive oil may also be expressed as from about 30 to 250 phr, and more desirably from about 70 to 200 phr.

Many additive oils are derived from petroleum fractions, and have particular ASTM designations depending on whether they fall into the class of paraffinic, naphthenic, or aromatic oils. Other types of additive oils, which can be used in the TPVs herein, are alpha olefinic synthetic oils, such as liquid polybutylene, e.g., products sold under the trademark Parapol®. The type of additive oil utilized will be that customarily used in conjunction with a particular rubber component.

The quantity of additive oil can be based on the total rubber content, and defined as the ratio, by weight, of additive oil to total rubber in the TPV, and that amount may in certain cases be the combined amount of process oil, typically added during processing, and extender oil, typically added after processing. The ratio may range, for example, from about 0 to about 4.0/1. Other ranges, having any of the following lower and upper limits, may also be utilized in a TPV: a lower limit of 0.4/1, or 0.6/1, or 0.8/1, or 1.0/1, or 1.2/1, or 1.5/1, or 1.8/1, or 2.0/1, or 2.5/1; and an upper limit (which may be combined with any of the foregoing lower limits) of 4.0/1, or 3.8/1, or 3.5/1, or 3.2/1, or 3.0/1, or 2.8/1. Larger amounts of additive oil can be used, although the deficit is often reduced physical strength of the composition, or oil weeping, or both. Additive oils other than petroleum based oils can be used also, such as oils derived from coal tar and pine tar, as well as synthetic oils, e.g., polyolefin compositions, e.g., Nexbase™, supplied by Fortum Oil N.V. Examples of plasticizers that are often used as additive oils are organic esters and synthetic plasticizers. Certain commercial rubber components, e.g., EPDM such as Vistalon 3666, include additive oil that is pre-blended before the rubber component is combined with the thermoplastic; as noted above, in such instance, the additive oil is referred to as "extender oil."

Other Additives

Compositions in accordance with those described herein may further comprise one or more additives. Suitable additives include, but are not limited to processing aids, antioxidants, UV stabilizers, curing agents, accelerators, flame retardants, colorants or pigments, and combinations thereof. In some embodiments, the composition further comprises at least one additive selected from processing aids, curing agents, accelerators, or combinations thereof.

The composition can optionally include one or more processing aids. Suitable processing aids can include, but are not limited to, plasticizers, tackifiers, extenders, chemical conditioners, homogenizing agents and peptizers such as mercaptans, petroleum and vulcanized vegetable oils, mineral oils, paraffin oils, polybutene oils, naphthenic oils, aromatic oils, waxes, resins, rosins, or other synthetic fluids having a lower pour point, lower emission, etc., compared to paraffin or mineral oil and the like. Some commercial examples of useful processing aids are SUNDEX™ (Sun Chemicals) and FLEXON™ (ExxonMobil Chemical Company).

Method for Making a Reaction Product

Also provided is a method for compounding the compositions as disclosed herein (e.g., to make a reaction product). The method may comprise the steps of: (a) combining a thermoplastic vulcanizate, a functionalized polymer, and an inorganic filler, to form a composition, wherein the thermoplastic vulcanizate comprising: (i) about 5 wt.% to about 85 wt.% of a thermoplastic resin component, and (ii) about 15 wt.% to about 95 wt.% of a dispersed and at least partially vulcanized rubber component, based on the total weight of the thermoplastic resin component and the rubber component; and (b) compounding the composition. The coefficient of linear thermal expansion measured either with injection mold flow or across injection mold flow of the compounded composition may be at least about 10% less than the coefficient of linear thermal expansion of a product free of the functionalized polymer and the inorganic filler, but otherwise identical in terms of its constituents. The compounded composition of some embodiments may be referred to as a reaction product.

The thermoplastic vulcanizate(s), functionalized polymer(s), inorganic filler(s), and other optional additives can be compounded by any suitable means. For example, they may be blended and/or mixed in a tumbler, continuous mixer, static mixer, batch mixer, extruder, or a combination thereof. The method of compounding should be sufficient to achieve an adequately high dispersion of the components. Methods of compounding include dry-blending, melt-blending in a batch mixer or in an extruder, or by a combination thereof. Compounding may also involve a "masterbatch" approach, where the target concentration of the functionalized polymer is achieved by combining the thermoplastic vulcanizate, the functionalized polymer and optionally additives with an appropriate amount of pre-blended masterbatch, followed by addition of the inorganic fillers and optionally curing agents, accelerators, and/or other additives to make the compositions. Dispersion (or "letdown") of the masterbatch may take place as part of a processing step used to fabricate articles, such as in the extruder on an injection molding machine or on a continuous extrusion line, or during a separate compounding step.

In some embodiments, the composition is compounded to form a reaction product by blending the components in a batch mixer, such as a twin rotor internal mixer equipped with a pressure ram. Mixing can be performed at pressures and temperatures such that the filler and other components are finely incorporated into, and become substantially uniformly dispersed within, the thermoplastic vulcanizate and the functionalized polymer.

In a preferred embodiment, the reaction product is formed by feeding the composition into an extruder (e.g., a twin screw extrusion line) and extruded. Such compounding is carried out at a shear temperature in the range of from 150 to 300°C, preferably 170 to 220°C, most preferably 190 to 200°C. An example temperature profile in an extruder used for compounding according to such embodiments may be in accordance with the following: 150 \°C (Zone 1 or feed zone), 180°C (Zone 2), 210°C (Zone 3), 200°C (Zone 4), 180°C (adaptor), 170°C (head), and 170°C (die). The screw speed may range from 50 to 500 rpm, preferably 100 to 250 rpm, most preferably 150 to 200 rpm. In such compounding operations, the composition will melt while it is processed through the barrel. Reaction products according to various embodiments are formed upon extrusion.

As noted, the reaction products formed according to various embodiments show reduced Coefficient of Linear Thermal Expansion (CLTE) measured either with or across injection mold flow, as compared to products that do not contain the functionalized polymer and the inorganic filler, but otherwise having the same make-up as the reaction products.

CLTE with injection mold flow of a specimen, is given by the following equation (I):

$$\mathbf{CLTE_{with\ mold\ flow}} = (\mathbf{L_2} - \mathbf{L_1})/\big(\mathbf{L_0}(\mathbf{T_2} - \mathbf{T_1})\big) \qquad (\mathbf{I})$$

$L_2$: specimen length at temperature $T_2$;
$L_1$: specimen length at temperature $T_1$;
$L_0$: specimen length at a reference temperature.

CLTE across injection mold flow of a specimen is given by the following equation (II):

$$\mathbf{CLTE_{accross\ mold\ flow}} = (\mathbf{W_2} - \mathbf{W_1})/\big(\mathbf{W_0}(\mathbf{T_2} - \mathbf{T_1})\big) \qquad (\mathbf{II})$$

$W_2$: specimen width at temperature $T_2$;
$W_1$: specimen width at temperature $T_1$;
$W_0$: specimen width at a reference temperature.

By adding the functionalized polymer and the inorganic filler, the CLTE measured either with or across injection mold flow of the reaction product is at least about 10% less than the coefficient of linear thermal expansion of a product free of the functionalized polymer and the inorganic filler, but otherwise identical in terms of its constituents. In a preferred embodiment, the CLTE measured with injection mold flow of the reaction product is at least about 20% less, such as at least about 30% less than the CLTE of a product free of the functionalized polymer and the inorganic filler, but otherwise identical in terms of its constituents.

End-Use Applications

The present invention further encompasses an article comprises the reaction product, including automotive parts, consumer goods, industrial goods, construction compositions, and packaging compositions. Examples of the articles include, but are not limited to, a molded article, such as a seal, a gasket, etc.; a hose, such as air hose, heat hose, garden hose, industry hose, etc.; a building profile, such as a roof sheet etc.; or a cable jacket. In some preferred embodiments the article is a seal part, such as an automotive weather seal part, for example, a door seal, a glass run channel, an inner belt line seal, and outer belt line seal.

The reaction products are molded into articles by conventional molding techniques known to those skilled in the art. For example, molded articles can be formed via injection molding or co-extrusion techniques.

Typical molded articles include vehicle sealing systems, coatings, e.g., low friction coating, thermoplastic veneers, thermoplastic overmoldings, films, tapes, noise attenuating devices, automotive interior surfacing, automotive and industrial belts and hoses, packaging (in decorative and protective applications), construction compositions, decorative building compositions and consumer goods such as handbags, backpacks, clothing, hand or power tools, drawer and cabinet liners, picture frames, and hunting decoys.

Vehicle sealing systems include glass run channels, door seals, belt line seals, body side moldings, sunroof moldings and windshield moldings. Vehicles contemplated include, but are not limited to, passenger automobiles, trucks of all sizes, farm vehicles, trains and the like.

The above description is intended to be illustrative of the invention, but should not be considered limiting. Persons skilled in the art will recognize that various modifications may be made without departing from the spirit and scope of the invention. Accordingly, the invention will be deemed to include all such modifications that fall within the appended claims and their equivalents.

Further, with respect to all ranges described herein, any bottom range value may be combined with any upper range value.

EXAMPLES

The present invention, while not meant to be limited by, may be better understood by reference to the following examples.

Santoprene™ 121-67W175 is thermoplastic vulcanizate grade commercially available from ExxonMobil Chemical Company, Houston, Texas, USA.

Exxelor™ PO 1020 is a PP-g-MAH (maleic anhydride-grafted polypropylene) commercially available from ExxonMobil Chemical Company, Houston, Texas, USA.

Jetfine™ T1 C is a magnesium silicate commercially available from IMERCYS S.A. with a median particle diameter $d_{50}$ of 1.3 micron by sedigraph measurement (ISO 13317-3) method and a particle specific surface B.E.T of 12.6 $m^2$/g (ISO 9277).

Table 1 provides a formulation of each composition used in Example 1 and Examples 2 to 5.

**Table 1: Formulations of the Compositions**

| Examples No. | Santoprene™ 121-67W175 (wt.%) | Jetfine™ T1C (wt.%) | Exxelor™ PO 1020 (wt.%) | Density of the Composition g/cm³ |
|---|---|---|---|---|
| 1 | 100 | - | - | 0.98 |
| 2 | 97 | 3 | - | 1.0 |
| 3 | 96 | 4 | - | 1.02 |
| 4 | 94 | 6 | - | 1.03 |
| 5 | 95.5 | 4 | 0.5 | 1.02 |

Example 1:

Three specimens including 100.0g of Santoprene™ grade 121-67W175 pellets only were prepared by injection molding through a single-screw extruder for determining CLTE of the product in Example 1. Parameters of the injection molding were as follows: processing temperature from 190°C to 200°C, less than 1 second injection time, packing for 40 seconds at 160 bars, and cooling for 80 seconds.

Example 2:

97.0g of Santoprene™ grade 121-67W175 pellets were first added in a drum blend machine, and then 3.0g of magnesium silicate was introduced into the drum. A blend was conducted at room temperature at a rotating speed of about 60 rpm for 20 minutes.

The resulting composition was then fed into a twin screw extrusion line and extruded through a second pass compounding. The temperature profile of the barrel of the twin screw extrusion line was as follows: 150°C (Zone 1 or feed zone), 180°C (Zone 2), 210°C (Zone 3), 200°C (Zone 4), 180°C (adaptor), 170°C (head), and 170°C (die). The screw speed was 200 rpm. The composition was melted while it was processed through the barrel. Upon extrusion, compounding pellets of the reaction product were formed.

Three injection-molded specimens with a size of 6×6 cm plaque were prepared for determining CLTE of the product in Example 2. Each injection-molded specimen was prepared by injection molding the compounding pellets through a single-screw extruder. Parameters of the injection molding were as follows: processing temperature from 190°C to 200°C, less than 1 second injection time, packing for 40 seconds at 160 bars, and cooling for 80 seconds.

Example 3:

96.0g of Santoprene™ grade 121-67W175 pellets were first added in a drum blend machine, and then 4.0g of magnesium silicate was introduced into the drum. A blend was conducted at room temperature at a rotating speed of about 60 rpm for 20 minutes.

Three injection-molded specimens with a size of 6×6 cm plaque were prepared for determining CLTE of the product in Example 3. Each injection-molded specimen was prepared by injection molding the compounding pellets through a single-screw extruder. Parameters of the injection molding were as follows: processing temperature from 190°C to 200°C, less than 1 second injection time, packing for 40 seconds at 160 bars, and cooling for 80 seconds.

Example 4:

94.0g of Santoprene™ grade 121-67W175 pellets were first added in a drum blend machine, and then 6.0g of magnesium silicate was introduced into the drum. A blend was conducted at room temperature at a rotating speed of about 60 rpm for 20 minutes.

Three injection-molded specimens with a size of 6×6 cm plaque were prepared for determining CLTE of the product in Example 4. Each injection-molded specimen was prepared by injection molding the compounding pellets through a single-screw extruder. Parameters of the injection molding were as follows: processing temperature from 190°C to 200°C, less than 1 second injection time, packing for 40 seconds at 160 bars, and cooling for 80 seconds.

Example 5:

95.5g of Santoprene™ grade 121-67W175 pellets and 0.5g of PP-g-MAH were added in a drum blend machine, and then 4.0g of magnesium silicate was introduced into the drum. A blend was conducted at room temperature at a rotating speed of about 60 rpm for 20 minutes.

Three injection-molded specimens with a size of 6×6 cm plaque were prepared for determining CLTE of the product in Example 5. Each injection-molded specimen was prepared by injection molding the compounding pellets through a single-screw extruder. Parameters of the injection molding were as follows: processing temperature from 190°C to 200°C, less than 1 second injection time, packing for 40 seconds at 160 bars, and cooling for 80 seconds.

To determine CLTE both with and across injection mold flow of the specimens in Examples 1-5, each specimen was placed in an air oven (equipment type: Vötsch VT 4004, commercially available from Vötsch Industrietechnik), and was oriented in two directions of the injection molding, i.e. with mold flow and across mold flow. A sensor connected to a transducer was attached on the top of the specimen. The sensor recorded variations of electrical current from a magnet displacement in a solenoid of the equipment. The temperature of the equipment was increased from 23°C to 80°C, keeping the specimen thermal stabilized, and then the measurement of shrinkage of the specimen was conducted under a cooling mode in which the temperatures of the equipment were decreased from 80°C to 23°C at a rate of 5°C/4minutes. Shrinkage data were collected every 40 seconds, and the values of CLTE with injection mold flow and across injection mold flow were calculated according to Equation **(I)** and **(II)** respectively, which are listed in Table 2. In addition, reduction percentage of CLTE of the specimens was calculated and is listed in Table 3.

**Table 2: CLTE of the Reaction Products**

| Examples No. | CLTE with Injection Mold Flow ($10^{-6}$ K$^{-1}$) | CLTE Across Injection old Flow ($10^{-6}$ K$^{-1}$) |
|:---:|:---:|:---:|
| 1 | 112 | 145 |
| 2 | 100 | 145 |
| 3 | 93 | 151 |
| 4 | 90 | 134 |
| 5 | 69 | 113 |

Table 3: Reduction Percentage of CLTE in Comparison with Example 1

| Examples No. | CLTE with Injection Mold Flow (%) | CLTE Across Injection Mold Flow (%) |
|---|---|---|
| 1 | | |
| 2 | 1.8 | 0 |
| 3 | 17 | -0.1 |
| 4 | 19.6 | 7.6 |
| 5 | 38.4 | 22.1 |

It can be seen from the Table 2, when adding the functionalized polymer and/or the inorganic filler (Examples 2 to 5), the coefficient of linear thermal expansion measured both with injection mold flow and across injection mold flow of the reaction products is generally less than the coefficient of linear thermal expansion of a product such as Example 1, which is free of the functionalized polymer and the inorganic filler, but otherwise identical in terms of its constituents. It can be seen from the Table 3, the coefficient of linear thermal expansion with injection mold flow of the reaction product as illustrated in Example 5 is even reduced 38.4% as compared to Example 1.

All documents described herein are incorporated by reference herein. When numerical lower limits and numerical upper limits are listed herein, ranges from any lower limit to any upper limit are contemplated. As is apparent from the foregoing general description and the specific embodiments, while forms of the invention have been illustrated and described, various modifications can be made without departing from the spirit and scope of the invention. Accordingly, it is not intended that the invention be limited thereby.

## Claims

1. A reaction product formed from a composition comprising a thermoplastic vulcanizate, a functionalized polymer, and an inorganic filler, wherein:

   the thermoplastic vulcanizate comprises: (i) 5 wt.% to 85 wt.% of a thermoplastic resin component, and (ii) 15 wt.% to 95 wt.% of a dispersed and at least partially vulcanized rubber component, based on the total weight of the thermoplastic resin component and the rubber component;
   the inorganic filler has a median particle diameter of 0.1-100 microns; and
   the coefficient of linear thermal expansion measured either with injection mold flow or across injection mold flow of the reaction product is at least 10% less than the coefficient of linear thermal expansion of a product free of the functionalized polymer and the inorganic filler, but otherwise identical in terms of its constituents.

2. The reaction product of claim 1, wherein the coefficient of linear thermal expansion measured with injection mold flow of the reaction product is at least 30% less than the coefficient of linear thermal expansion of a product free of the functionalized polymer and the inorganic filler, but otherwise identical in terms of its constituents.

3. The reaction product of claim 1 or 2, wherein the functionalized polymer comprises a functional group selected from the group consisting of: maleic anhydride, citraconic anhydride, 2-methyl maleic anhydride, 2-chloromaleic anhydride, 2,3-dimethylmaleic anhydride, bicyclo[2,2,1]-5-heptene-2,3-dicarboxylic anhydride and 4-methyl-4-cyclohexene-1,2-dicarboxylic anhydride, acrylic acid, methacrylic acid, maleic acid, fumaric acid, itaconic acid, citraconic acid, mesaconic acid, crotonic acid, bicyclo(2.2.2)oct-5-ene-2,3-dicarboxylic acid anhydride, 2-oxa-1,3-diketospiro(4.4)non-7-ene, bicyclo(2.2.1)hept-5-ene-2,3-dicarboxylic acid anhydride, maleopimaric acid, tetrahydrophtalic anhydride, norborn-5-ene-2,3-dicarboxylic acid anhydride, nadic anhydride, methyl nadic anhydride, himic anhydride, methyl himic anhydride, x-methyl-bicyclo(2.2.1)hept-5-ene-2,3- dicarboxylic acid anhydride (XMNA), and any combination thereof.

4. The reaction product of any one of the preceding claims, wherein the functionalized polymer comprises a functional group selected from maleic acid and maleic anhydride.

5. The reaction product of any one of the preceding claims, wherein the functionalized polymer comprises a functionalized polyolefin.

**6.** The reaction product of claim 1 or 2, wherein the functionalized polymer comprises maleic anhydride grafted polypropylene.

**7.** The reaction product of any one of the preceding claims, wherein the functionalized polymer is added in an amount of from 0.1 wt.% to 10 wt.%, based on the total weight of the composition.

**8.** The reaction product of any one of the preceding claims, wherein the functionalized polymer is added in an amount of from 0.1 wt.% to 1 wt.%, based on the total weight of the composition.

**9.** The reaction product of any one of the preceding claims, wherein the thermoplastic resin component comprises a polyethylene homopolymer, a polypropylene homopolymer, an ethylene-propylene copolymer, or any combination thereof.

**10.** The reaction product of any one of the preceding claims, wherein the rubber component comprises a rubber selected from the group consisting of: an ethylene-propylene rubber, ethylene-propylene-diene rubber, and natural rubber.

**11.** The reaction product of any one of the preceding claims, wherein the inorganic filler is selected from the group consisting of: talc, calcium carbonate, calcium hydroxide, barium sulfate, mica, calcium silicate, clay, kaolin, silica, alumina, wollastonite, magnesium carbonate, magnesium hydroxide, titanium oxide, zinc oxide, zinc sulfate, and combinations thereof.

**12.** The reaction product of claim 11, wherein the inorganic filler comprises talc or wollastonite.

**13.** The reaction product of any one of the preceding claims, wherein the inorganic filler is added in an amount of from 4 wt.% to 10 wt.%, based on the total weight of the composition.

**14.** A method comprising:

(a) combining a thermoplastic vulcanizate, a functionalized polymer and an inorganic filler to form a composition, wherein:
the thermoplastic vulcanizate comprises: (i) 5 wt.% to 85 wt.% of a thermoplastic resin component, and (ii) 15 wt.% to 95 wt.% of a dispersed and at least partially vulcanized rubber component, based on the total weight of the thermoplastic resin component and the rubber component; and
(b) compounding the composition to form a product;
wherein the coefficient of linear thermal expansion measured either with injection mold flow or across injection mold flow of the product is at least 10% less than the coefficient of linear thermal expansion of a product free of the functionalized polymer and the inorganic filler, but otherwise identical in terms of its constituents.

**15.** A method for reducing the coefficient of linear thermal expansion of a composition, the method comprising:

(a) combining a thermoplastic vulcanizate, a functionalized polymer and an inorganic filler to form a composition, wherein:
the thermoplastic vulcanizate comprises: (i) 5 wt.% to 85 wt.% of a thermoplastic resin component, and (ii) 15 wt.% to 95 wt.% of a dispersed and at least partially vulcanized rubber component, based on the total weight of the thermoplastic resin component and the rubber component; and
(b) compounding the composition.

**Patentansprüche**

**1.** Reaktionsprodukt, gebildet aus einer Zusammensetzung, die ein thermoplastisches Vulkanisat, ein funktionalisiertes Polymer und einen anorganischen Füllstoff umfasst, wobei:

das thermoplastische Vulkanisat umfasst: (i) 5 Gew.-% bis 85 Gew.-% einer thermoplastischen Harzkomponente und (ii) 15 Gew.-% bis 95 Gew.-% einer dispergierten und zumindest teilweise vulkanisierten Kautschukkomponente, bezogen auf das Gesamtgewicht der thermoplastischen Harzkomponente und der Kautschukkomponente;
der anorganische Füllstoff einen mittleren Teilchendurchmesser von 0,1-100 Microns hat; und

der lineare Wärmeausdehnungskoeffizient, der entweder in Richtung des Spritzgießflusses oder quer zum Spritzgießfluss des Reaktionsprodukts gemessen wird, mindestens 10% geringer ist, als der lineare Wärmeausdehnungskoeffizient eines Produkts, das frei von dem funktionalisierten Polymer und dem anorganischen Füllstoff, aber ansonsten in seinen Bestandteilen identisch ist.

2. Reaktionsprodukt nach Anspruch 1, wobei der in Richtung des Spritzgussstroms des Reaktionsprodukts gemessene lineare Wärmeausdehnungskoeffizient mindestens 30% niedriger ist, als der lineare Wärmeausdehnungskoeffizient eines Produkts, das frei von dem funktionalisierten Polymer und dem anorganischen Füllstoff, aber ansonsten in seinen Bestandteilen identisch ist.

3. Reaktionsprodukt nach Anspruch 1 oder 2, wobei das funktionalisierte Polymer eine funktionelle Gruppe ausgewählt aus der Gruppe bestehend aus: Maleinsäureanhydrid, Citraconsäureanhydrid, 2-Methylmaleinsäureanhydrid, 2-Chlormaleinsäureanhydrid, 2,3-Dimethylmaleinsäureanhydrid, Bicyclo[2,2,1]-5-Hepten-2,3-dicarbonsäureanhydrid und 4-Methyl-4-cyclohexen-1,2-dicarbonsäureanhydrid, Acrylsäure, Methacrylsäure, Maleinsäure, Fumarsäure, Itaconsäure, Citraconsäure, Mesaconsäure, Crotonsäure, Bicyclo[2,2,2]-Oct-5-en-2,3-dicarbonsäureanhydrid, 2-Oxa-1,3-diketospiro [4,4]non-7-en, Bicyclo[2,2,1]hept-5-en-2,3-dicarbonsäureanhydrid, Maleopimarsäure, Tetrahydrophthalsäureanhydrid, Norborn-5-en-2,3-dicarbonsäureanhydrid, Nadinsäurean-hydrid, Methyl-Nadinsäureanhydrid, Himinsäureanhydrid, Methyl-Himinsäureanhydrid, X-Methyl-Bicyclo[2,2,1]-Hept-5-en-2,3-dicarbonsäureanhydrid (XMNA) und eine beliebige Kombination davon umfasst.

4. Reaktionsprodukt nach einem der vorhergehenden Ansprüche, wobei das funktionalisierte Polymer eine funktionelle Gruppe ausgewählt aus Maleinsäure und Maleinsäureanhydrid umfasst.

5. Reaktionsprodukt nach einem der vorhergehenden Ansprüche, wobei das funktionalisierte Polymer ein funktionalisiertes Polyolefin umfasst.

6. Reaktionsprodukt nach Anspruch 1 oder 2, wobei das funktionalisierte Polymer mit Maleinsäureanhydrid gepfropftes Polypropylen umfasst.

7. Reaktionsprodukt nach einem der vorhergehenden Ansprüche, wobei das funktionalisierte Polymer in einer Menge von 0,1 Gew.-% bis 10 Gew.-%, bezogen auf das Gesamtgewicht der Zusammensetzung, zugegeben wird.

8. Reaktionsprodukt nach einem der vorhergehenden Ansprüche, wobei das funktionalisierte Polymer in einer Menge von 0,1 Gew.-% bis 1 Gew.-%, bezogen auf das Gesamtgewicht der Zusammensetzung, zugegeben wird

9. Reaktionsprodukt nach einem der vorhergehenden Ansprüche, wobei die thermoplastische Harzkomponente ein Polyethylen-Homopolymer, ein Polypropylen-Homopolymer, ein Ethylen-Propylen-Copolymer oder eine Kombination davon umfasst.

10. Reaktionsprodukt nach einem der vorhergehenden Ansprüche, wobei die Kautschukkomponente einen Kautschuk umfasst, der aus der Gruppe ausgewählt ist, die aus einem Ethylen-Propylen-Kautschuk, Ethylen-Propylen-Dien-Kautschuk und Naturkautschuk besteht.

11. Reaktionsprodukt nach einem der vorhergehenden Ansprüche, wobei der anorganische Füllstoff ausgewählt ist aus der Gruppe bestehend aus: Talk, Calciumcarbonat, Calcium-hydroxid, Bariumsulfat, Glimmer, Calciumsilikat, Ton, Kaolin, Siliciumdioxid, Aluminiumoxid, Wollastonit, Magnesiumcarbonat, Magnesiumhydroxid, Titanoxid, Zinkoxid, Zinksulfat und Kombinationen davon.

12. Reaktionsprodukt nach Anspruch 11, wobei der anorganische Füllstoff Talk oder Wollastonit umfasst.

13. Reaktionsprodukt nach einem der vorhergehenden Ansprüche, wobei der anorganische Füllstoff in einer Menge von 4 Gew.-% bis 10 Gew.-%, bezogen auf das Gesamtgewicht der Zusammensetzung, zugegeben wird.

14. Verfahren, umfassend:

(a) Kombinieren eines thermoplastischen Vulkanisats, eines funktionalisierten Polymers und eines anorganischen Füllstoffs zur Bildung einer Zusammensetzung, wobei:
das thermoplastische Vulkanisat umfasst: (i) 5 Gew.-% bis 85 Gew.-% einer thermoplastischen Harzkomponente und (ii) 15 Gew.-% bis 95 Gew.-% einer dispergierten und zumindest teilweise vulkanisierten Kautschukkomponente, bezogen auf das Gesamtgewicht der thermoplastischen Harzkomponente und der Kautschukkomponente; und

(b) Compoundieren der Zusammensetzung zur Bildung eines Produkts;

wobei der lineare Wärmeausdehnungskoeffizient, der entweder in Richtung des Spritzgießflusses oder quer zum Spritzgießfluss des Reaktionsprodukts gemessen wird, mindestens 10% geringer ist, als der lineare Wärmeausdehnungskoeffizient eines Produkts, das frei von dem funktionalisierten Polymer und dem anorganischen Füllstoff, aber ansonsten in seinen Bestandteilen identisch ist.

15. Verfahren zur Verringerung des linearen Wärmeausdehnungskoeffizienten einer Zusammensetzung, wobei das Verfahren umfasst:

(a) Kombinieren eines thermoplastischen Vulkanisats, eines funktionalisierten Polymers und eines anorganischen Füllstoffs zur Bildung einer Zusammensetzung, wobei:

das thermoplastische Vulkanisat umfasst: (i) 5 Gew.-% bis 85 Gew.-% einer thermoplastischen Harzkomponente und (ii) 15 Gew.-% bis 95 Gew.-% einer dispergierten und zumindest teilweise vulkanisierten Kautschukkomponente, bezogen auf das Gesamtgewicht der thermoplastischen Harzkomponente und der Kautschukkomponente; und

(b) Compoundieren der Zusammensetzung.

## Revendications

1. Produit réactionnel formé d'une composition comprenant un vulcanisat thermoplastique, un polymère fonctionnalisé, et une charge inorganique, dans lequel :

le vulcanisat thermoplastique comprend : (i) 5 % en poids à 85 % en poids d'un constituant résine thermoplastique, et (ii) 15 % en poids à 95 % en poids d'un constituant caoutchouc dispersé et au moins partiellement vulcanisé, relativement au poids total du constituant résine thermoplastique et du constituant caoutchouc ;

la charge inorganique a un diamètre de particule médian de 0,1 à 100 microns ; et

le coefficient de dilatation thermique linéaire mesuré soit parallèlement à la direction de l'écoulement lors du moulage par injection, soit perpendiculairement à la direction de l'écoulement lors du moulage par injection du produit réactionnel, est au moins 10 % inférieur au coefficient de dilatation thermique linéaire d'un produit exempt du polymère fonctionnalisé et de la charge inorganique, mais identique par ailleurs en ce qui concerne ses constituants.

2. Produit réactionnel selon la revendication 1, dans lequel le coefficient de dilatation thermique linéaire mesuré parallèlement à la direction de l'écoulement lors du moulage par injection du produit réactionnel est au moins 30 % inférieur au coefficient de dilatation thermique linéaire d'un produit exempt du polymère fonctionnalisé et de la charge inorganique, mais identique par ailleurs en ce qui concerne ses constituants.

3. Produit réactionnel selon la revendication 1 ou 2, dans lequel le polymère fonctionnalisé comprend un groupe fonctionnel sélectionné dans le groupe constitué de l'anhydride maléique, de l'anhydride citraconique, de l'anhydride 2-méthylmaléique, de l'anhydride 2-chloromaléique, de l'anhydride 2,3-diméthylmaléique, de l'anhydride bicyclo[2,2,1]-5-heptène-2,3-dicarboxylique et de l'anhydride 4-méthyl-4-cyclohexène-1,2-dicarboxylique, de l'acide acrylique, de l'acide méthacrylique, de l'acide maléique, de l'acide fumarique, de l'acide itaconique, de l'acide citraconique, de l'acide mésaconique, de l'acide crotonique, de l'anhydride de l'acide bicyclo(2.2.2)oct-5-ène-2,3-dicarboxylique, de l'anhydride de l'acide 2-oxa-1,3-dicétospiro(4.4)non-7-ène, de l'anhydride de l'acide bicyclo(2.2.1)hept-5-ène-2,3-dicarboxylique, de l'acide maléopimarique, de l'anhydride tétrahydrophtalique, de l'anhydride de l'acide norborn-5-ène-2,3-dicarboxylique, de l'anhydride nadique, de l'anhydride méthylnadique, de l'anhydride himique, de l'anhydride méthylhimique, de l'anhydride de l'acide x-méthyl-bicyclo(2.2.1)hept-5-ène-2,3-dicarboxylique (XMNA), et de n'importe quelle combinaison de ceux-ci.

4. Produit réactionnel selon l'une quelconque des revendications précédentes, dans lequel le polymère fonctionnalisé comprend un groupe fonctionnel sélectionné parmi l'acide maléique et l'anhydride maléique.

5. Produit réactionnel selon l'une quelconque des revendications précédentes, dans lequel le polymère fonctionnalisé comprend une polyoléfine fonctionnalisée.

**6.** Produit réactionnel selon la revendication 1 ou 2, dans lequel le polymère fonctionnalisé comprend un polypropylène greffé d'anhydride maléique.

**7.** Produit réactionnel selon l'une quelconque des revendications précédentes, dans lequel le polymère fonctionnalisé est ajouté dans une quantité de 0,1 % en poids à 10 % en poids, relativement au poids total de la composition.

**8.** Produit réactionnel selon l'une quelconque des revendications précédentes, dans lequel le polymère fonctionnalisé est ajouté dans une quantité de 0,1 % en poids à 1 % en poids, relativement au poids total de la composition.

**9.** Produit réactionnel selon l'une quelconque des revendications précédentes, dans lequel le constituant résine thermoplastique comprend un homopolymère de polyéthylène, un homopolymère de polypropylène, un copolymère d'éthylène-propylène, ou n'importe quelle combinaison de ceux-ci.

**10.** Produit réactionnel selon l'une quelconque des revendications précédentes, dans lequel le constituant caoutchouc comprend un caoutchouc sélectionné dans le groupe constitué d'un caoutchouc d'éthylène-propylène, d'un caoutchouc d'éthylène-propylène-diène, et d'un caoutchouc naturel.

**11.** Produit réactionnel selon l'une quelconque des revendications précédentes, dans lequel la charge inorganique est sélectionnée dans le groupe constitué du talc, du carbonate de calcium, de l'hydroxyde de calcium, du sulfate de baryum, du mica, du silicate de calcium, de l'argile, du kaolin, de la silice, de l'alumine, de la wollastonite, du carbonate de magnésium, de l'hydroxyde de magnésium, de l'oxyde de titane, de l'oxyde de zinc, du sulfate de zinc, et de combinaisons de ceux-ci.

**12.** Produit réactionnel selon la revendication 11, dans lequel la charge inorganique comprend du talc ou de la wollastonite.

**13.** Produit réactionnel selon l'une quelconque des revendications précédentes, dans lequel la charge inorganique est ajoutée dans une quantité de 4 % en poids à 10 % en poids, relativement au poids total de la composition.

**14.** Procédé comprenant :

(a) la combinaison d'un vulcanisat thermoplastique, d'un polymère fonctionnalisé et d'une charge inorganique pour former une composition, dans lequel :
le vulcanisat thermoplastique comprend : (i) 5 % en poids à 85 % en poids d'un constituant résine thermoplastique, et (ii) 15 % en poids à 95 % en poids d'un constituant caoutchouc dispersé et au moins partiellement vulcanisé, relativement au poids total du constituant résine thermoplastique et du constituant caoutchouc ; et
(b) le compoundage de la composition pour former un produit ; dans lequel le coefficient de dilatation thermique linéaire mesuré soit parallèlement à la direction de l'écoulement lors du moulage par injection, soit perpendiculairement à la direction de l'écoulement lors du moulage par injection du produit, est au moins 10 % inférieur au coefficient de dilatation thermique linéaire d'un produit exempt du polymère fonctionnalisé et de la charge inorganique, mais identique par ailleurs en ce qui concerne ses constituants.

**15.** Procédé de réduction du coefficient de dilatation thermique linéaire d'une composition, le procédé comprenant :

(a) la combinaison d'un vulcanisat thermoplastique, d'un polymère fonctionnalisé et d'une charge inorganique pour former une composition, dans lequel :
le vulcanisat thermoplastique comprend : (i) 5 % en poids à 85 % en poids d'un constituant résine thermoplastique, et (ii) 15 % en poids à 95 % en poids d'un constituant caoutchouc dispersé et au moins partiellement vulcanisé, relativement au poids total du constituant résine thermoplastique et du constituant caoutchouc ; et
(b) le compoundage de la composition.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 62276696
- US 4130535 A
- US 4311268 A
- US 4594390 A
- US 6147160 A
- US 4540753 A, Cozewith
- US 4311628 A
- US 5177147 A
- US 6342565 B
- US 2007044123 A
- US 6288171 B
- US 5672660 A
- US 5843577 A
- US 6300418 B
- JP 2005336359 A
- WO 03025084 A
- WO 03025037 A
- WO 03025036 A
- EP 1295926 A1
- US 6150464 A

### Non-patent literature cited in the description

- **VER STRATE et al.** *21 MACROMOLECULES,* 1998, 3360-3371
- **A.R. COOPER.** Concise Encyclopedia of Polymer Science and Engineering. John Wiley & Sons, 1990, 638-639
- *ANTEC 2006 paper,* 08 May 2006